# EUROPEAN PATENT SPECIFICATION

(11) **EP 3 487 042 B1**
(45) Date of publication and mention of the grant of the patent: **11.08.2021**
(21) Application number: 18206290.1
(22) Date of filing: 14.11.2018
(51) Int. Cl.: H02K 1/20, H02K 1/14, H02K 9/14, H02K 9/06, H02K 7/14, H02K 5/20, H02K 5/18

(54) **ELECTRIC MOTOR**
ELEKTROMOTOR
MOTEUR ÉLECTRIQUE

(30) Priority: 20.11.2017 US 201715817738
(43) Date of publication of application: 22.05.2019
(73) Proprietor: Hamilton Sundstrand Corporation, Charlotte, NC 28217-4578 (US)
(72) Inventor: TANGUDU, Jagadeesh, South Windsor, CT 06074 (US); YUN, Thomas M., Glastonbury, CT 06033 (US)
(74) Representative: Dehns

(56) References cited:
- EP-A1- 3 076 526
- EP-A2- 2 058 926
- WO-A1-2017/161527
- JP-A- 2002 013 467
- JP-A- 2013 153 555
- US-A- 5 982 071

## Description

### BACKGROUND

The present disclosure relates to an electric motor, and more particularly, to a stator assembly that can cool an electric motor.

Traditional electric motors may include a stator, a rotor, and an aluminum frame with cooling fins located at an exterior of the frame. The cooling fins are adapted to dissipate heat generated in the electric motor due to electromagnetic losses both in the copper windings and laminated steel core (i.e., hysteresis and eddy current). The cooling fins may dissipate the heat via natural and/or forced convection depending upon the design of the motor. Traditional manufacturing techniques include machining of an aluminum structure into straight fins and then integrating (e.g., shrink fit) the structure with the stator at the outer diameter surface. Improvements in manufacturing techniques, versatility in fin design, and optimizing cooling capability are desirable. WO 2017/161527 A1 describes a stator lamination and electrical machine. US 5982071 and JP2013153555 describe the cooling of electrical machinery.

### BRIEF DESCRIPTION

A stator assembly of an electric motor is defined in claim 1.

Additionally to the foregoing embodiment, the stator assembly includes electrical windings disposed radially inward from the plurality of ring structures.

In the alternative or additionally thereto, in the foregoing embodiment, each one of the plurality of cooling fins lies within an imaginary plane containing the axis.

In the alternative or additionally thereto, in the foregoing embodiment, the plurality of cooling fins of a first ring structure of the plurality of cooling fins are circumferentially offset from the plurality of cooling fins of an adjacent ring structure of the plurality of ring structures.

In the alternative or additionally thereto, in the foregoing embodiment, the plurality of cooling fins are helical.

In the alternative or additionally thereto, in the foregoing embodiment, the plurality of cooling fins include a first plurality of helical cooling fins angled in a first direction and a second plurality of helical cooling fins angled in an opposite direction.

In the alternative or additionally thereto, in the foregoing embodiment, the first plurality of helical cooling fins is axially adjacent to and circumferentially offset from the second plurality of helical cooling fins.

In the alternative or additionally thereto, in the foregoing embodiment, the first plurality of helical cooling fins is axially adjacent to and circumferentially aligned to the second plurality of helical cooling fins.

An electric motor according to another, non-limiting, embodiment includes a rotor adapted for rotation about an axis; and a stator assembly according to claim 1 surrounding the rotor. The stator assembly includes windings; a first ring structure disposed radially outward from and concentric to the rotor, the first ring structure including a first ring and a first plurality of cooling fins spaced circumferentially about and projecting radially from the first ring; and a second ring structure disposed radially outward from and concentric to the rotor, the second ring structure including a second ring and a second plurality of cooling fins spaced circumferentially about and projecting radially from the second ring, wherein the first ring structure is axially adjacent to the second ring structure.

Additionally to the foregoing embodiment, the electric motor includes a fan adapted to rotate with the rotor and configured to induce airflow over the first and second plurality of cooling fins.

In the alternative or additionally thereto, in the foregoing embodiment, the first and second ring structures are part of a stator assembly.

In the alternative or additionally thereto, in the foregoing embodiment, the electric motor includes an external housing, wherein the first and second ring structures are an integral part of the housing.

In the alternative or additionally thereto, in the foregoing embodiment, each one of the first plurality of cooling fins include a first forward edge and an opposite first rearward edge, and each one of the second plurality of cooling fins include a second forward edge and an opposite second rearward edge, and wherein the first forward edge is circumferentially aligned to the first rearward edge and the second forward edge is circumferentially aligned to the second rearward edge.

In the alternative or additionally thereto, in the foregoing embodiment, the first forward edge is circumferentially aligned and axially adjacent to the second rearward edge.

In the alternative or additionally thereto, in the foregoing embodiment, the first forward edge is axially adjacent to and circumferentially offset from the second rearward edge.

In the alternative or additionally thereto, in the foregoing embodiment, the first and second plurality of cooling fins are helical.

In the alternative or additionally thereto, in the foregoing embodiment, each one of the first plurality of cooling fins include a first forward edge and an opposite first rearward edge, and each one of the second plurality of cooling fins include a second forward edge and an opposite second rearward edge, and wherein the first forward edge is circumferentially offset from the first rearward edge and the second forward edge is circumferentially offset from the second rearward edge.

In an alternative which is not part of the present invention, each one of at least one of the first and second plurality of cooling fins is pin-shaped.

In an alternative which is not part of the present invention, each one of at least one of the first and second plurality of cooling fins is shaped like an air-foil.

In the alternative or additionally thereto, in the foregoing embodiment, the stator assembly includes an index feature carried between the first and second rings for circumferentially aligning the first ring to the second ring

The foregoing features and elements may be combined in various combinations without exclusivity, unless expressly indicated otherwise. These features and elements as well as the operation thereof will become more apparent in light of the following description and the accompanying drawings. However, it should be understood that the following description and drawings are intended to be exemplary in nature and non-limiting.

### BRIEF DESCRIPTION OF THE DRAWINGS

Various features will become apparent to those skilled in the art from the following detailed description of the disclosed non-limiting embodiments. The drawings that accompany the detailed description can be briefly described as follows:
FIG. 1 is a perspective view of an electric motor with portions removed to show internal detail, and as one exemplary embodiment;
FIG. 2 is a perspective view of a stator assembly which is not part of the present invention;
FIG. 3 is a perspective view of a ring structure of the stator assembly which is not part of the present invention;
FIG. 4 is a perspective view of an embodiment of the ring structure;
FIG. 5 is a perspective view of an embodiment of the stator assembly;
FIG. 6 is a perspective view of another embodiment of the stator assembly;
FIG. 7 is a perspective view of a stator assembly which is not part of the present invention; and
FIG. 8 is a perspective view of a stator assembly which is not part of the present invention.

### DETAILED DESCRIPTION

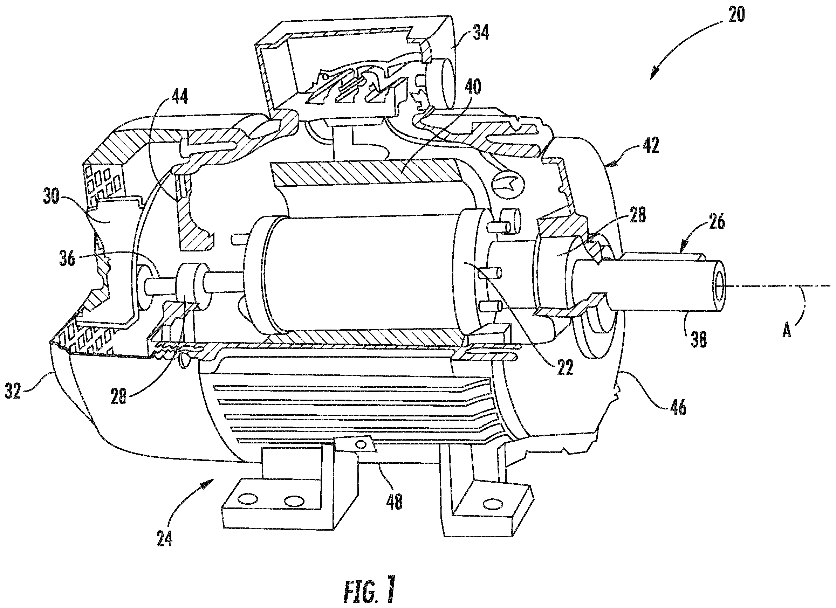

Referring to FIG. 1, an electric motor 20 is illustrated as one, non-limiting, embodiment of the present disclosure. The illustrated electric motor 20 includes a rotor 22 adapted to rotate about a rotation axis A, a stator assembly 24, a rotating shaft 26, bearings 28, a cooling fan 30, a fan cage 32, a terminal box 34, and other components. The shaft 26 is centered to the axis A and may be fixed to the rotor 22, such that the rotor 22 and the shaft 26 rotate together as one piece. The stator assembly 24 is generally located radially outward from the rotor 22 and shaft 26, and is generally stationary during operation of the electric motor 20.

The bearings 28 are adapted to provide structural support and minimize friction between the rotating shaft 26 and the stationary stator assembly 24. In one embodiment, the bearings 28 may be located axially between, and supported by, respective, opposite, end portions 36, 38 of the rotating shaft 26 and the stator assembly 24. The end portions 36, 38 may project from opposite, axial, ends of the rotor 22. End portion 36 may be attached to the cooling fan 30 for rotation of the fan, and end portion 38 may be engaged to any variety of external devices (not shown) adapted to be driven by the electric motor 20.

The stator assembly 24 may include stator windings 40, and an external housing or casing 42. The electrical windings 40 are generally located radially inward from the casing 42, and may be generally supported by and fixed to, the casing 42. The casing 42 may include opposite end segments 44, 46, and a mid-segment 48. The mid-segment 48 may be cylindrical, and/or may be circumferentially continuous, and spans axially between the end segments 44, 46. Each end segment 44, 46 may span radially between the shaft 26 and the mid-segment 48, and may support a respective bearing 28. In one embodiment, the terminal box 34 may be attached to an external surface of the mid-segment 48 for facilitating an electrical connection between the stator windings 40 and an external power source (not shown).

The fan cage 32 facilitates protection of the fan 30, and may provide a safety function by preventing contact of the rotating fan with a person. The cooling fan 30 may generally be axially located between the end segment 44 of the external casing 42 and the fan cage 32. In one embodiment, the fan cage 32 is attached to the end segment 44 of the casing 42.

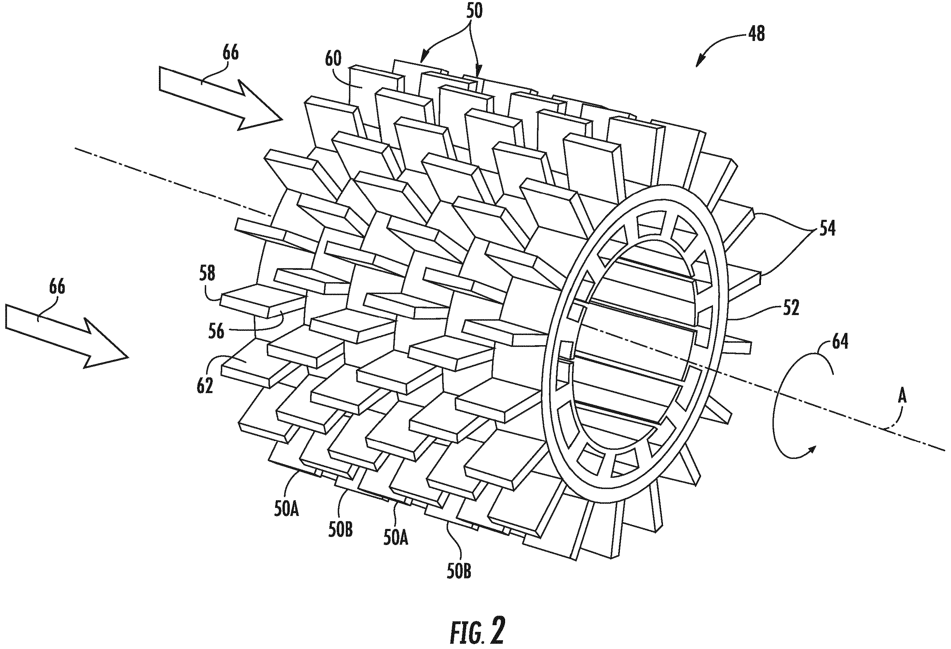

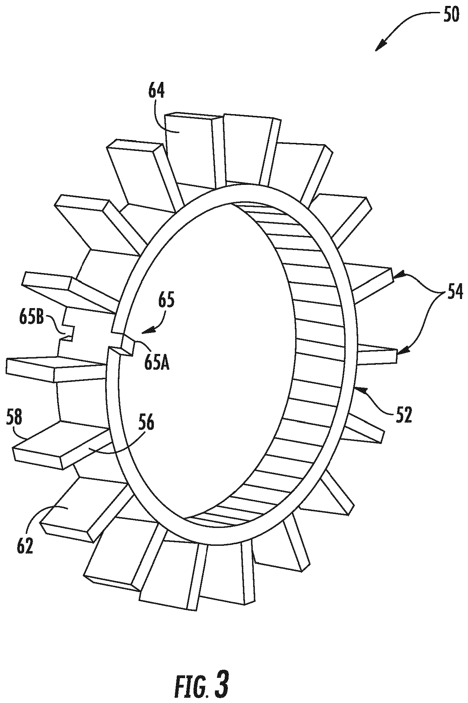

Referring to FIGS. 2 and 3, the mid-segment 48 of the external casing 42 may include a plurality of ring structures 50 axially aligned side-by-side. Each ring structure 50 may include a base ring 52 and a plurality of cooling fins 54. The cooling fins 54 may project radially outward from the ring 52, and may be circumferentially distributed about the ring. Each fin 54 may include an axially forward edge 56 and a rearward edge 58. The edges 56, 58 may substantially project radially outward from the ring 52. Each fin 54 may further include opposite facing surfaces 60, 62 each substantially spanning axially between the edges 56, 58. With respect to the direction of rotation (see arrow 64 in FIG. 2) of the shaft 26, surface 60 may be a leading surface, and surface 62 may be a trailing surface. In one example, each fin 54 may generally lie within a respective, imaginary, plane that contains the axis A. That is, fin 54 may span axially and radially, but may not be angled, or may not be twisted, in a circumferential direction.

Each base ring 52 may include an index feature 65 configured to circumferentially align the base ring 52 to the next, axially adjacent base ring. As illustrated the index feature 65 may include an axially projecting tab 65A adapted to project into a recess 65B of the index feature 65 and in the adjacent base ring. During operation of the electric motor 20, the index feature 65 may also prevent circumferential misalignment of the adjacent base rings 52, and thus misalignment of the respective, axially adjacent, fins 54.

In one embodiment, the fins 54 of a first ring structure 50 may be circumferentially offset from the fins 54 of the next adjacent ring structure. More specifically, the plurality of ring structures 50 may include a multitude of axially alternating ring structures 50A, 50B. Ring structure 50A may be axially adjacent to and disposed between two ring structures 50B, and so on. When the stator assembly 24 is fully assembled, the fins 54 of ring structure 50A may be circumferentially aligned with one-another, and the fins 54 of the ring structure 50B may be circumferentially aligned with one-another. However, the fins 54 of ring structure 50A may be circumferentially centered between adjacent fins 54 of the axially adjacent ring structure 50B. This pattern may generally repeat itself throughout the plurality of ring structures 50.

The ring structures 50A, 50B may generally be the same, but may be orientated differently during assembly of the stator assembly 24. The number of ring structures 50 used in any one application of a motor 20 may be dependent upon the motor itself and/or application and environment of use. It is contemplated and understood that one ring structure type may be applied to a variety of electric motors thereby optimizing motor design versatility and reducing manufacturing and part distribution costs.

During operation of the electric motor 20, the fan 30 produces a flow of cooling air (see arrow 66 in FIG. 2) through the ring structures 50 of the stator assembly 24. In the example of the circumferentially offset ring structures 50, the flow of air may first impinge upon the rearward edges 58 of the offset fins 54 of the first ring structure 50A before flowing past the associated fin surfaces 60, 62, then impinging the rearward edges 58 of the fins 54 of the next ring structure 50B, and so on. The impingement of cooling air against the exposed edges 58 causes an air flow turbulence that increases heat transfer, thereby improving the cooling capability of the fins.

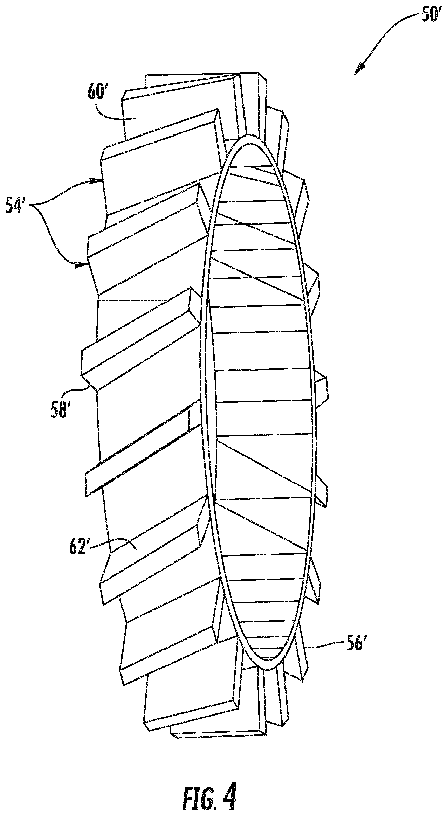

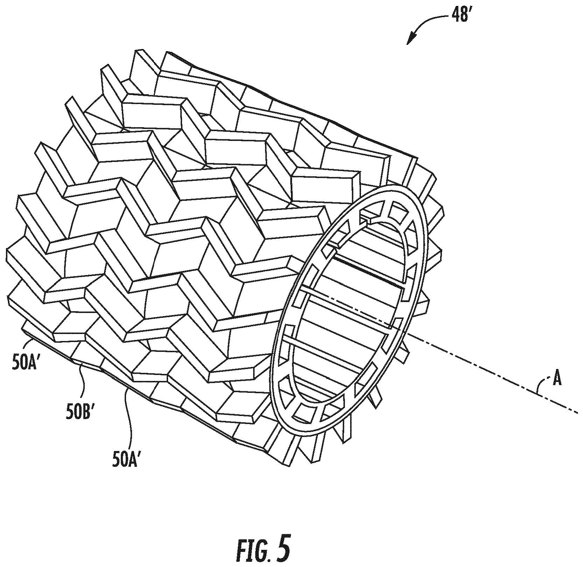

Referring to FIGS. 4 and 5, an embodiment of the ring structure is illustrated wherein like elements to the first embodiment have like identifying numerals except with the addition of a prime symbol suffix. The ring structure 50' may include a plurality of fins 54' each having an axially forward edge 56' and a rearward edge 58'. The edges 56', 58' may substantially project radially outward from the ring 52'. Each fin 54' may further include opposite facing surfaces 60', 62' each substantially spanning, both axially and circumferentially (i.e., fin pitch or slant), between the edges 56', 58'. In one embodiment, the fins 54, of a first ring structure 50A' may be pitched at an opposite angle than the fins 54' of an axially adjacent second ring structure 50B' of the plurality of ring structures 50'.

Referring to FIG. 5, when a mid-segment 48' of a stator assembly is fully assembled, the forward edges 56' of the fins 54' of the ring structure 50A' may be circumferentially aligned to, and may be directly axially opposed to, the rearward edges 58' of the axially adjacent ring structure 50B'. Similarly, the forward edges 56' of the fins 54' of the ring structure 50B' may be circumferentially aligned to, and may be directly axially opposed to, the rearward edges 58' of the next ring structure 50A'. When fully assembled, the mid-segment 48' resembles a pattern that is herringbone-like. The individual ring structures 50' may be helical ring structures (i.e., helical-like, or chevron fins). The herringbone pattern of the mid-segment 48' causes cooling air flow turbulence that promotes heat transfer.

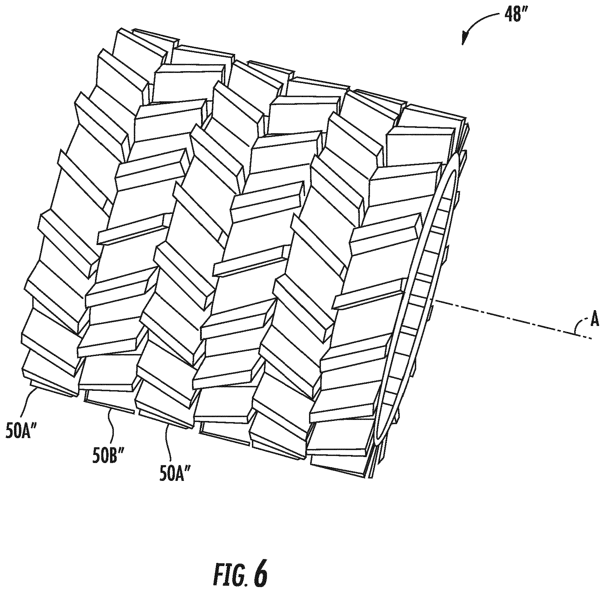

Referring to FIG. 6, another embodiment of a mid-segment of a stator assembly is illustrated wherein like elements to the first and/or second embodiment have like identifying numerals except with the addition of a double prime symbol suffix. A mid-segment 48" includes the herringbone pattern of the second embodiment, but with the circumferential off-set of the first embodiment. The Herringbone pattern combined with the circumferential off-set between fins may promote further cooling air turbulence to further enhance heat transfer capability. However, the enhancement of heat transfer capability (i.e., breaking the thermal boundary layer) may be predicated on the allowable increase in load placed, for example, on the cooling fan.

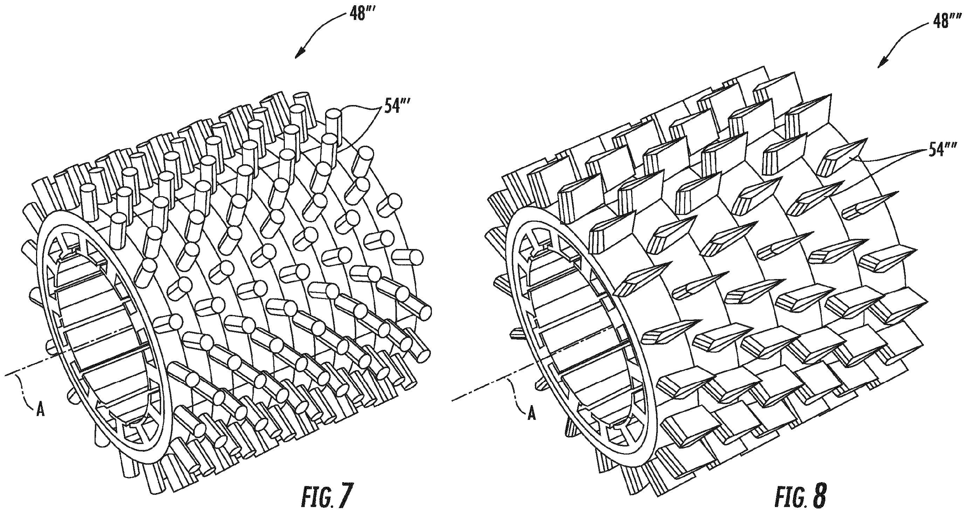

Referring to FIG. 7, an example, not according to the invention, of a mid-segment of a stator assembly is illustrated wherein like elements to the first embodiment have like identifying numerals except with the addition of a triple prime symbol suffix. A mid-segment 48'" may include a plurality of fins 54"'. Each fin 54'" may be a projecting pin or stanchion (e.g., cylindrical in shape).

Referring to FIG. 8, another example, not according to the invention, of a mid-segment of a stator assembly is illustrated wherein like elements to the first embodiment have like identifying numerals except with the addition of a quad prime symbol suffix. A mid-segment 48"" may include a plurality of fins 54"". Each fin 54"" may be in the shape of an air-foil.

Advantages and benefits of the present disclosure include improved heat transfer capability at the thermal boundary layer of each cooling fin. With the resulting higher heat transfer coefficient, cooling performance is optimized and can be varied by assembling patterns. Additional benefits include ease of manufacturing, and the ability to operate the electric motor at higher current density and/or higher power density.

The term "about" is intended to include the degree of error associated with measurement of the particular quantity based upon the equipment available at the time of filing the application. For example, "about" can include a range of ± 8% or 5%, or 2% of a given value.

The terminology used herein is for the purpose of describing particular embodiments only and is not intended to be limiting of the present disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the claims. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A stator assembly (24) of an electric motor (20) comprising:
a plurality of ring structures (50A,50B) centered to an axis, each of the plurality of ring structures (50A,50B) including a ring and a plurality of cooling fins (54) and wherein each cooling fin projects radially from the ring to a distal end of said fin and the plurality of fins are spaced apart from each other circumferentially about the ring, wherein each of the plurality of ring structures is disposed axially adjacent to another one of the plurality of ring structures (50A,50B), and wherein the plurality of fins (54') each have an axially forward edge (56') and a rearward edge (58') and **characterized in that** the forward (56') and rearward edges (58') of the fins (54') of a first ring structure of said plurality of ring structures are positioned relative to the forward (56') and rearward edges (58') of a second ring structure so as to form a herringbone pattern.

2. The stator assembly set forth in claim 1, further comprising:
electrical windings disposed radially inward from the plurality of ring structures (50A,50B).

3. The stator assembly set forth in claim 1, wherein each one of the plurality of cooling fins lies within an imaginary plane containing the axis; and wherein the plurality of cooling fins of a first ring structure (50A,50B) of the plurality of cooling fins (54) are circumferentially offset from the plurality of cooling fins (54) of an adjacent ring structure (50A,50B) of the plurality of ring structures (50A,50B).

4. The stator assembly set forth in any preceding claim, wherein the plurality of cooling fins (54) are helical.

5. The stator assembly set forth in claim 4, wherein the plurality of cooling fins include a first plurality of helical cooling fins angled in a first direction and a second plurality of helical cooling fins angled in an opposite direction.

6. The stator assembly set forth in claim 5, wherein the first plurality of helical cooling fins (54) is axially adjacent to and circumferentially offset from the second plurality of helical cooling fins (54).

7. The stator assembly set forth in claim 5, wherein the first plurality of helical cooling fins (54) is axially adjacent to and circumferentially aligned to the second plurality of helical cooling fins (54).

8. An electric motor (20) comprising:
a rotor (22) adapted for rotation about an axis; and
the stator assembly (24) of claim 1 surrounding the rotor, the stator assembly including:
windings;
said plurality of ring structures (50A, 50B) comprising a first ring structure (50A,50B) disposed radially outward from and concentric to the rotor (22), the first ring structure (50A,50B) including a first ring and a first plurality of cooling fins (54) spaced circumferentially about and projecting radially from the first ring; and
said plurality of ring structures (50A, 50B) further comprising a second ring structure (50A,50B) disposed radially outward from and concentric to the rotor (22), the second ring structure (50A,50B) including a second ring and a second plurality of cooling fins (54) spaced circumferentially about and projecting radially from the second ring, wherein the first ring structure (50A,50B) is axially adjacent to the second ring structure (50A,50B).

9. The electric motor set forth in claim 8, further comprising:
a fan adapted to rotate with the rotor (22) and configured to induce airflow over the first and second plurality of cooling fins (54).

10. The electric motor set forth in claim 8 or 9, wherein the first and second ring structures are part of a stator assembly (24).

11. The electric motor set forth in claim 8, 9 or 10, further comprising:
an external housing, wherein the first and second ring structures (50A,50B) are an integral part of the housing.

12. The electric motor set forth in any of claims 8 to 11, wherein each one of the first plurality of cooling fins (54) include a first forward edge (56') and an opposite first rearward edge (58'), and each one of the second plurality of cooling fins (54) include a second forward edge (56') and an opposite second rearward edge (58'), and wherein the first forward edge (56') is circumferentially aligned to the first rearward edge (58') and the second forward edge (56') is circumferentially aligned to the second rearward edge (58').

13. The electric motor set forth in claim 12, wherein the first forward edge (56') is circumferentially aligned and axially adjacent to the second rearward edge.

14. The electric motor set forth in claim 12, wherein the first forward edge (56') is axially adjacent to and circumferentially offset from the second rearward edge (58').

## Patentansprüche

1. Statorbaugruppe (24) eines Elektromotors (20), umfassend:
eine Vielzahl von Ringstrukturen (50A,50B), die auf einer Achse zentriert ist, wobei jede der Vielzahl von Ringstrukturen (50A,50B) einen Ring und eine Vielzahl von Kühllamellen (54) beinhaltet und wobei jede Kühllamelle radial von dem Ring zu einem distalen Ende der Lamelle vorsteht und die Vielzahl von Lamellen in Umfangsrichtung um den Ring herum voneinander beabstandet sind, wobei jede der Vielzahl von Ringstrukturen axial angrenzend aneinander an einer der Vielzahl von Ringstrukturen (50A,50B) angeordnet ist, und wobei die Vielzahl von Lamellen (54') jeweils eine axial vordere Kante (56') und eine hintere Kante (58') aufweist, und **dadurch gekennzeichnet, dass** die vordere (56') und hintere Kante (58') der Lamellen (54') einer ersten Ringstruktur der Vielzahl von Ringstrukturen relativ zu der vorderen (56') und hinteren Kante (58') einer zweiten Ringstruktur positioniert sind, um ein Fischgrätenmuster auszubilden.

2. Statorbaugruppe nach Anspruch 1, ferner umfassend:
elektrische Wicklungen, die radial einwärts von der Vielzahl von Ringstrukturen (50A,50B) angeordnet sind.

3. Statorbaugruppe nach Anspruch 1, wobei jede der Vielzahl von Kühllamellen innerhalb einer imaginären Ebene liegt, die die Achse enthält; und wobei die Vielzahl von Kühllamellen einer ersten Ringstruktur (50A,50B) der Vielzahl von Kühllamellen (54) in Umfangsrichtung von der Vielzahl von Kühllamellen (54) einer angrenzenden Ringstruktur (50A,50B) der Vielzahl von Ringstrukturen (50A,50B) versetzt ist.

4. Statorbaugruppe nach einem der vorhergehenden Ansprüche, wobei die Vielzahl von Kühllamellen (54) spiralförmig ist.

5. Statorbaugruppe nach Anspruch 4, wobei die Vielzahl von Kühllamellen eine erste Vielzahl von spiralförmigen Kühllamellen, die in einer ersten Richtung gewinkelt sind, und eine zweite Vielzahl von spiralförmigen Kühllamellen, die in einer entgegengesetzten Richtung gewinkelt sind, beinhaltet.

6. Statorbaugruppe nach Anspruch 5, wobei die erste Vielzahl von spiralförmigen Kühllamellen (54) axial an die zweite Vielzahl von spiralförmigen Kühllamellen (54) angrenzt und in Umfangsrichtung von diesen versetzt ist.

7. Statorbaugruppe nach Anspruch 5, wobei die erste Vielzahl von spiralförmigen Kühllamellen (54) axial an die zweite Vielzahl von spiralförmigen Kühllamellen (54) angrenzt und in Umfangsrichtung auf diese ausgerichtet ist.

8. Elektromotor (20), umfassend:
einen Rotor (22), der zur Drehung um eine Achse angepasst ist; und
die Statorbaugruppe (24) nach Anspruch 1, die den Rotor umgibt, wobei die Statorbaugruppe Folgendes umfasst:
Wicklungen;
wobei die Vielzahl von Ringstrukturen (50A, 50B) eine erste Ringstruktur (50A,50B) umfasst, die radial auswärts von und konzentrisch zu dem Rotor (22) angeordnet ist, wobei die erste Ringstruktur (50A,50B) einen ersten Ring und eine erste Vielzahl von Kühllamellen (54) beinhaltet, die in Umfangsrichtung um den ersten Ring beabstandet ist und radial von diesem hervorragt; und
wobei die Vielzahl von Ringstrukturen (50A, 50B) ferner eine zweite Ringstruktur (50A,50B) umfasst, die radial auswärts von dem Rotor (22) und konzentrisch zu diesem angeordnet ist, wobei die zweite Ringstruktur (50A,50B) einen zweiten Ring und eine zweite Vielzahl von Kühllamellen (54) beinhaltet, die in Umfangsrichtung um den zweiten Ring beabstandet ist und radial von diesem hervorragt, wobei die erste Ringstruktur (50A,50B) axial an die zweite Ringstruktur (50A,50B) angrenzt.

9. Elektromotor nach Anspruch 8, ferner umfassend:
ein Gebläse, das zum Drehen mit dem Rotor (22) konfiguriert ist und das zum Induzieren eines Luftstroms über die erste und zweite Vielzahl von Kühllamellen (54) konfiguriert ist.

10. Elektromotor nach Anspruch 8 oder 9, wobei die erste und zweite Ringstruktur Teil einer Statorbaugruppe (24) sind.

11. Elektromotor nach Anspruch 8, 9 oder 10, ferner umfassend:
ein externes Gehäuse, wobei die erste und zweite Ringstruktur (50A,50B) ein integraler Bestandteil des Gehäuses sind.

12. Elektromotor nach einem der Ansprüche 8 bis 11, wobei jede der ersten Vielzahl von Kühllamellen (54) eine erste vordere Kante (56') und eine entgegengesetzte erste hintere Kante (58') beinhaltet und jede der zweiten Vielzahl von Kühllamellen (54) eine zweite vordere Kante (56') und eine entgegengesetzte zweite hintere Kante (58') beinhaltet, und wobei die erste vordere Kante (56') in Umfangsrichtung mit der ersten hinteren Kante (58') ausgerichtet ist und die zweite vordere Kante (56') in Umfangsrichtung mit der zweiten hinteren Kante (58') ausgerichtet ist.

13. Elektromotor nach Anspruch 12, wobei die erste vordere Kante (56') in Umfangsrichtung mit der zweiten hinteren Kante ausgerichtet ist und axial an diese angrenzt.

14. Elektromotor nach Anspruch 12, wobei die erste vordere Kante (56') axial an die zweite hintere Kante (58') angrenzt und in Umfangsrichtung von dieser versetzt ist.

## Revendications

1. Ensemble stator (24) d'un moteur électrique (20) comprenant :
une pluralité de structures annulaires (50A, 50B) centrées sur un axe, chacune de la pluralité de structures annulaires (50A, 50B) comportant un anneau et une pluralité d'ailettes de refroidissement (54) et dans lequel chaque ailette de refroidissement fait saillie radialement de l'anneau à une extrémité distale de ladite ailette et la pluralité d'ailettes sont espacées les unes des autres de manière circonférentielle autour de l'anneau, dans lequel chacune de la pluralité de structures annulaires est disposée axialement de manière adjacente à une autre de la pluralité de structures annulaires (50A, 50B), et dans lequel la pluralité d'ailettes (54') ont chacune un bord axialement avant (56') et un bord arrière (58') et **caractérisé en ce que** les bords avant (56') et
arrière (58') des ailettes (54') d'une première structure annulaire de ladite pluralité de structures annulaires sont positionnés par rapport aux bords avant (56') et arrière (58') d'une seconde structure annulaire de manière à former un motif à chevrons.

2. Ensemble stator selon la revendication 1, comprenant en outre :
des enroulements électriques disposés radialement vers l'intérieur à partir de la pluralité de structures annulaires (50A, 50B).

3. Ensemble stator selon la revendication 1, dans lequel chacune de la pluralité d'ailettes de refroidissement se trouve dans un plan imaginaire contenant l'axe ; et dans lequel la pluralité d'ailettes de refroidissement d'une première structure annulaire (50A, 50B) de la pluralité d'ailettes de refroidissement (54) sont décalées circonférentiellement par rapport à la pluralité d'ailettes de refroidissement (54) d'une structure annulaire adjacente (50A, 50B) de la pluralité de structures annulaires (50A, 50B).

4. Ensemble stator selon une quelconque revendication précédente, dans lequel la pluralité d'ailettes de refroidissement (54) sont hélicoïdales.

5. Ensemble stator selon la revendication 4, dans lequel la pluralité d'ailettes de refroidissement comportent une première pluralité d'ailettes de refroidissement hélicoïdales inclinées dans une première direction et une seconde pluralité d'ailettes de refroidissement hélicoïdales inclinées dans une direction opposée.

6. Ensemble stator selon la revendication 5, dans lequel la première pluralité d'ailettes de refroidissement hélicoïdales (54) est adjacente axialement à la seconde pluralité d'ailettes de refroidissement hélicoïdales (54) et décalée circonférentiellement par rapport à celle-ci.

7. Ensemble stator selon la revendication 5, dans lequel la première pluralité d'ailettes de refroidissement hélicoïdales (54) est adjacente axialement à la seconde pluralité d'ailettes de refroidissement hélicoïdales (54) et alignée circonférentiellement avec celle-ci.

8. Moteur électrique (20) comprenant :
un rotor (22) conçu pour tourner autour d'un axe ; et
l'ensemble stator (24) selon la revendication 1 entourant le rotor, l'ensemble stator comportant :
des enroulements ;
ladite pluralité de structures annulaires (50A, 50B) comprenant une première structure annulaire (50A, 50B) disposée radialement vers l'extérieur et concentrique par rapport au rotor (22), la première structure annulaire (50A, 50B) comportant un premier anneau et une première pluralité d'ailettes de refroidissement (54) espacées circonférentiellement autour du premier anneau et faisant saillie radialement à partir de celui-ci ; et
ladite pluralité de structures annulaires (50A, 50B) comprenant en outre une seconde structure annulaire (50A, 50B) disposée radialement vers l'extérieur et concentrique par rapport au rotor (22), la seconde structure annulaire (50A, 50B) comportant un second anneau et une seconde pluralité d'ailettes de refroidissement (54) espacées circonférentiellement autour du second anneau et faisant saillie radialement à partir de cleui-ci, dans lequel la première structure annulaire (50A, 50B) est axialement adjacente à la seconde structure annulaire (50A, 50B) .

9. Moteur électrique selon la revendication 8, comprenant en outre :
une soufflante adaptée pour tourner avec le rotor (22) et conçue pour induire un écoulement d'air sur la première et la seconde pluralité d'ailettes de refroidissement (54).

10. Moteur électrique selon la revendication 8 ou 9, dans lequel les première et seconde structures annulaires font partie d'un ensemble stator (24).

11. Moteur électrique selon la revendication 8, 9 ou 10, comprenant en outre :
un boîtier externe, dans lequel les première et seconde structures annulaires (50A, 50B) font partie intégrante du boîtier.

12. Moteur électrique selon l'une quelconque des revendications 8 à 11, dans lequel chacune de la première pluralité d'ailettes de refroidissement (54) comporte un premier bord avant (56') et un premier bord arrière opposé (58'), et chacune de la seconde pluralité d'ailettes de refroidissement (54) comporte un second bord avant (56') et un second bord arrière opposé (58'), et dans lequel le premier bord avant (56') est aligné circonférentiellement avec le premier bord arrière (58') et le second bord avant (56') est aligné circonférentiellement avec le second bord arrière (58').

13. Moteur électrique selon la revendication 12, dans lequel le premier bord avant (56') est aligné circonférentiellement avec le second bord arrière et est axialement adjacent à celui-ci.

14. Moteur électrique selon la revendication 12, dans lequel le premier bord avant (56') est axialement adjacent au second bord arrière (58') et circonférentiellement décalé par rapport à celui-ci.
